# EUROPÄISCHE PATENTSCHRIFT

(11) **EP 1 274 606 B1**
(45) Veröffentlichungstag und Bekanntmachung des Hinweises auf die Patenterteilung: **19.10.2005**
(21) Anmeldenummer: 01940152.0
(22) Anmeldetag: 12.04.2001
(51) Int. Cl.: B60R 16/02

(54) **LENKSTOCKSCHALTER**
STEERING COLUMN SWITCH
COMMUTATEUR DE COLONNE DE DIRECTION

(30) Priorität: 20.04.2000 DE 10019795
(43) Veröffentlichungstag der Anmeldung: 15.01.2003
(73) Patentinhaber: Delphi Technologies Inc., Troy, MI 48007 (US)
(72) Erfinder: BESIER, Holger, 65375 Oestrich-Winkel (DE); HULBERT, Thomas, 67575 Eich (DE)
(74) Vertreter: Becker, Bernd
(86) Internationale Anmeldenummer: PCT/DE2001/001478
(87) Internationale Veröffentlichungsnummer: WO 2001/081119

(56) Entgegenhaltungen:
- EP-A- 0 861 753
- EP-A- 0 913 319
- DE-A- 19 649 906
- DE-A- 19 755 094
- DE-C- 4 427 883
- FR-A- 2 753 575

## Beschreibung

Die Erfindung bezieht sich auf einen Lenkstockschalter mit einer in einem mantelrohrfesten, aus einem Gehäuseoberteil und einem Gehäuseunterteil zusammengesetzten Gehäuse angeordneten elektrischen Verbindungseinrichtung zwischen Lenkrad und Bordnetz, die einen spiralförmig aufgewickelten, flexiblen elektrischen Leiter umfaßt, der in das Gehäuseoberteil eingesetzt und von einem lenkradfesten Deckel abgedeckt ist, wobei der Leiter über eine Anschlußeinheit mit dem Lenkrad verbunden und der Verbindungseinrichtung innerhalb des Gehäuses ein an dem Deckel befestigter Rotor eines Lenkwinkelsensors zugeordnet ist, dessen an dem Gehäuseoberteil befestigter Stator eine Leiterplatte kontaktiert.

Aus der DE 44 36 172 A1 ist eine elektrische Verbindungseinrichtung, insbesondere für eine in der Lenkradschüssel eines Kraftfahrzeuges untergebrachte Luftsack-Schutzeinrichtung, mit einem feststehenden Gehäuseteil und einem dazu um einen begrenzten Winkel verdrehbaren Gehäuseteil bekannt, wobei die Gehäuseteile jeweils eine Anschlußeinheit tragen und einen spiralförmig aufgewickelten, mit seinen Enden mit den Anschlußeinheiten verbundenen flexiblen elektrischen Leiter umschließen. Die der Lenkradschüssel zugeordnete Verbindungseinrichtung umfaßt eine Anzeigeeinrichtung für die Winkellage der Gehäuseteile zueinander. Die elektrische Kopplung mit dem Bordnetz des Kraftfahrzeuges erfolgt über entsprechende Kabelstränge. Somit ist bei der Montage ein relativ großer Aufwand nötig, da sowohl die Verbindungseinrichtung als auch stets vorhandene Lenkstockschalter elektrisch mit dem Bordnetz verbundenen werden müssen. Ferner muß die Lenkradschüssel relativ groß dimensioniert sein, um die Verbindungseinrichtung aufnehmen zu können. Darüber hinaus benötigen die unterschiedlichen Kabelstränge der Verbindungseinrichtung sowie der Lenkstockschalter relativ viel Platz innerhalb eines Mantelrohres.

Darüberhinaus sind Vorrichtungen zur Bestimmung des Maßes der Verdrehung zweier Teile zueinander in den unterschiedlichsten Ausführungsformen bekannt. Hierbei bildet ein Teil zumeist einen feststehenden Stator, der durch ein Gehäuse oder eine Halterung ausgebildet wird, in dem ein zweites Teil, das an einer Lenksäule eines Kraftfahrzeuges befestigt sein kann, als Rotor drehbar gelagert ist.

Zur genauen Bestimmung eines Drehwinkels werden gewöhnlich Drehgeber mit analogen oder digitalen Lenkwinkelsensoren benutzt. Digitale Lenkwinkelsensoren bestehen im Prinzip aus einer kodierten Einrichtung und einem die Kodierung abtastenden Sensor, die sich relativ zueinander drehen. Bei inkrementellen Sensoren ist die kodierte Einrichtung eine Scheibe oder ein Rad mit gleichmäßig über den Umfang verteilten, gleichartigen Markierungen, die von dem Sensor detektiert und durch Abgabe entsprechender Impulse signalisiert werden. Aufeinanderfolgende Impulse werden drehrichtungsabhängig mitgezählt, um aus der akkumulierten Summe den resultierenden Drehwinkel zu ermitteln. Um hieraus die Ist-Position zu bestimmen, bedarf es der Vorgabe einer Referenzposition, auf die der Zählwert bezogen werden kann. Diese Referenzenposition wird üblicherweise durch eine gesonderte, von dem Sensor erfassbare Referenz- oder Nullmarke kenntlich gemacht. Bei absoluten Sensoren hingegen ist die Kodierung ortsabhängig, so daß für jede Winkelposition ein individuelles Signal erzeugt werden kann, das die betreffende Position direkt eindeutig anzeigt. Gleiche Winkelpositionen innerhalb aufeinander folgender Vollumdrehungen sind geometrisch nicht voneinander unterscheidbar, weshalb gegebenenfalls zusätzliche Maßnahmen getroffen werden müssen.

Die DE 196 49 906 A1 offenbart einen Drehwinkelsensor zur Erfassung von Drehwinkeln, der aus einem aus einem Gehäusegrundteil, einem Gehäuseoberteil und einem Gehäuseunterteil zusammengesetzten Sensorgehäuse besteht. In dem Sensorgehäuse ist eine drehbewegliche Sensorwelle mit einer drehfest daranangeordneten, Schleifkontakte tragenden Rotorscheibe und eine mehrere Schleifbahnen aufweisende, drehfest am Sensorgehäuse fixierte Statorscheibe angeordnet. Im Weiteren ist eine elektrische Leitung in das Sensorgehäuse hineingeführt, über die der Drehwinkelsensor an das Bordnetz eines Kraftfahrzeuges angeschlossen ist. Die Sensorwelle ist als Hohlwelle ausgeführt und zur Kopplung an die Lenkungsanlage an einer ihrer beiden Endbereiche mit einer Innenverzahnung versehen.

Im weiteren beschreibt die DE 197 55 094 A1 (Oberbegriff von Anspruch 1) einen Lenkstockschalter, dem eine aus einer elektrischen Verbindungseinrichtung und einem Lenkwinkelsensor bestehende Einheit zugeordnet ist. Die Verbindungseinrichtung ist in einem Gehäuseabschnitt angeordnet, der einen Deckel für den auf einer Leiterplatte befestigten Stator des Lenkwinkelsensors bildet, wobei die Leiterplatte als den Deckel verschließender Boden ausgebildet ist. Unterhalb der Leiterplatte befindet sich ein Innenraum des Lenkstockschalters.

Ferner ist aus der DE 44 27 883 C1 eine elektrisch und/ oder optisch wirkende Einrichtung mit einer Halteeinrichtung bekannt. Die Halteeinrichtung ist an einem Mantelrohr befestigt und einstückiger Bestandteil des zu einem Einzelschalter gehörigen Gehäuses. An der Halteeinrichtung ist eine Lenksäulenverkleidung angeordnet. Die Halteeinrichtung trägt eine als Spiralkabelkassette ausgebildete Verbindungseinrichtung sowie einen mit einer Leiterplatte versehenen Lenkwinkelsensor. Die einzelnen vorstehend aufgeführten Funktionskomponenten der Einrichtung sind dabei über Befestigungsmittel so zusammengefasst, dass eine für sich händelbare Baueinheit entsteht. Die Verbindungseinrichtung wird auf die dem Lenkrad zugeordnete Seite einer Gehäuseanordnung des Lenkwinkelsensors aufgesetzt und das feststehende Gehäuseteil der Verbindungseinrichtung wird mit der Halteeinrichtung verschraubt. Das verdrehbare Gehäuseteil der Verbindungseinrichtung greift mit einem als Blende ausgebildeten Bereich, der als Rotor dient, in eine umlaufend in der Gehäuseanordnung des Lenkwinkelsensors vorhandene Nut ein.

Schließlich offenbart die EP 0 913 319 A2 eine Lenkwinkelsensoreinheit mit einer elektrischen Verbindungseinrichtung, die einen spriralförmig aufgewickelten Leiter umfasst und einem Lenkwinkelsensor, wobei der Lenkwinkelsensor in die Verbindungseinrichtung integriert und die Lenkwinkelsensoreinheit als eine Einheit zwischen einem Lenkrad und einem Lenkstockschalter angeordnet ist. Die Verbindungseinrichtung weist einen Kabelhalter für den Leiter auf, der an seiper Unterseite mit einem unteren Gehäuseteil verschlossen ist. In eine zylindrische Ausnehmung des Kabelhalters sind ein oberer Rotor sowie ein unterer Rotor eingesetzt. Der Lenkwinkelsensor besteht im Wesentlichen aus einem unteren Gehäuseteil sowie einem damit verbundenen oberen Gehäuseteil, zwischen denen ein als Code-Platte ausgebildeter Rotor und ein als Lichtschranke ausgebildeter Stator angeordnet sind, wobei die Code-Platte mit einem oberen Rotor und einem unteren Rotor in Verbindung steht. Der Kabelhalter der Verbindungseinrichtung und das obere Gehäuseteil des Lenkwinkelsensors sind miteinander verschraubt, wobei eine Feder zwischen dem unteren Rotor der Verbindungseinrichtung und dem oberen Rotor des Lenkwinkelsensors unter Vorspannung eingespannt ist. Der untere Rotor der Verbindungseinrichtung und der obere Rotor des Lenkwinkelsensors stehen über Mitnehmer in drehfester Verbindung. Eine Drehbewegung der Rotoren der Verbindungseinrichtung wird über die Rotoren des Lenkwinkelsensors auf die Code-Platte übertragen und von der Lichtschranke detektiert.

Es ist Aufgabe der Erfindung, einen Lenkstockschalter der eingangs genannten Art zu schaffen, der bei einem geringen Platzbedarf eine Vielzahl von Funktionen vereinigt und dabei aufgrund einer geringen Anzahl von Einzelteilen leicht zu montieren ist und der eine relativ einfache Verdrahtung aufweist.

Erfindungsgemäß wird die Aufgabe dadurch gelöst, daß der Leiter mit einer mit dem Bordnetz verbundenen zentralen Leiterplatte, die der Stator direkt kontaktiert, gekoppelt ist, wobei der Rotor als Zahnrad ausgebildet ist und der Stator ein in das Zahnrad eingreifendes, innerhalb eines Statorgehäuses drehbar gelagertes Zwischenrad umfaßt und ein als Meßzahnrad ausgebildeter Sensor die Umdrehungen des Zwischenrades detektiert.

Zur Erfassung einer Drehwinkeländerung einer Lenksäule werden demzufolge keine weiteren Bauteile benötigt. Darüberhinaus erfolgt die Festlegung des Rotors an der ohnehin an dem Lenkrad befestigten Verbindungseinrichtung, weshalb eine gesonderte Befestigung an der Lenksäule entfällt. Ferner erfolgt die elektrische Verbindung mit dem Bordnetz ohne zusätzliche Bauteile, wie beispielsweise Kabelstränge, da die Leiterplatte des Lenkstockschalters, die weitere Funktionen erfüllt, zum Anschluß genutzt wird.

Nach einer vorteilhaften Ausgestaltung der Erfindung ist der Rotor an dem Deckel und der Stator an dem Gehäuseoberteil befestigt. Der Deckel als drehbares, den Leiter der Verbindungseinrichtung überspannendes Bauteil vollzieht die vorgenommenen Drehwinkeländerungen synchron zum Lenkrad und somit zur Lenksäule. Somit ändert der Rotor seine Lage in gleichem Maß wie die Lenksäule, weshalb exakte Meßwerte bezüglich der Drehwinkeländerung erfaßt werden.

Zweckmäßigerweise umfaßt der Deckel zur lenkradseitigen Befestigung einen Flansch, an dem ein koaxialer Ansatz zur Halterung der Anschlußeinheit der Verbindungseinrichtung sowie zur Festlegung des Rotors angeformt ist. Hierbei überspannt der Flansch den Leiter und bildet mit der Oberseite des Gehäuseteils im wesentlichen eine Ebene. Die Anschlußeinheit dient zur relativ einfachen elektrischen Kopplung des Lenkrades mit dem Bordnetz. Der von dem Flansch des Deckels abgehende Ansatz durchragt einen von dem spiralförmig aufgewickelten Leiter gebildeten Freiraum im Zentrum desselben sowie eine Fläche des Gehäuseoberteils, auf der der Leiter aufliegt. Aufgrund der Anordnung des Ansatzes in dem Gehäuseoberteil ist eine definierte Lage zu der Lenksäule vorgegeben, die auch der Rotor einnimmt.

Nach einer Weiterbildung des Erfindungsgedankens ist der Rotor als Zahnrad ausgebildet, dessen Nabe den Ansatz des Deckels übergreift. Das Zahnrad ist relativ einfach anzufertigen und bietet die Möglichkeit, eine Drehwinkeländerung zu erfassen.

Sonach ist in den Lenkstockschalter eine zusätzliche Funktion integriert, wobei der Lenkwinkelsensor mit dem Lenkstockschalter eine Baueinheit bildet, die relativ einfach an einem Mantelrohr eines Kraftfahrzeugs zu montieren ist. Zur Erfassung einer Drehwinkeländerung einer Lenksäule werden demzufolge keine weiteren Bauteile benötigt. Darüberhinaus erfolgt die Festlegung des Rotors an der ohnehin an dem Lenkrad befestigten Verbindungseinrichtung, weshalb eine gesonderte Befestigung an der Lenksäule entfällt. Ferner erfolgt die elektrische Verbindung mit dem Bordnetz ohne zusätzliche Bauteile, wie beispielsweise Kabelstränge, da die Leiterplatte des Lenkstockschalters, die weitere Funktionen erfüllt, zum Anschluß genutzt wird. Eine berührungslose Überwachung und Erfassung der Drehwinkeländerung erfolgt dadurch, daß der Stator als die Umdrehungen des Zahnrades detektierender Sensor ausgebildet ist. Ein solcher Sensor unterliegt keinem mechanischen Verschleiß und weist geringe Abmessungen auf, weshalb der Sensor bei geringem Platzbedarf an dem Gehäuseoberteil festlegbar ist. Darüberhinaus lassen sich mit dem Sensor relativ exakte Meßdaten zur weiteren Auswertung erfassen. Das Zahnrad ist relativ einfach anzufertigen und bietet die Möglichkeit, eine Drehwinkeländerung zu erfassen, indem mit dem Sensor eine Änderung der Stellung der Zähne beispielsweise mittels Lichtreflexion erfaßt wird.

Zweckmäßigerweise umfaßt der Deckel zur lenkradseitigen Befestigung einen Flansch, an dem ein koaxialer Ansatz zur Halterung der Anschlußeinheit der Verbindungseinrichtung sowie zur Festlegung des Rotors angeformt ist. Hierbei überspannt der Flansch den Leiter und bildet mit der Oberseite des Gehäuseteils im wesentlichen eine Ebene. Die Anschlußeinheit dient zur relativ einfachen elektrischen Kopplung des Lenkrades mit dem Bordnetz. Der von dem Flansch des Deckels abgehende Ansatz durchragt einen von dem spiralförmig aufgewickelten Leiter gebildeten Freiraum im Zentrum desselben sowie eine Fläche des Gehäuseoberteils, auf der der Leiter aufliegt. Aufgrund der Anordnung des Ansatzes in dem Gehäuseoberteil ist eine definierte Lage zu der Lenksäule vorgegeben, die auch der Rotor einnimmt.

Nach einer Weiterbildung des Erfindungsgedankens ist übergreift die Nabe des Zahnrades den Ansatz des Deckels. Bevorzugt ist der Ansatz des Deckels umfangsseitig mit mehreren gleichmäßig verteilten Klipsarmen versehen, die in korrespondierende Nuten der Nabe des Zahnrades eingreifen. Somit ist die drehfeste Anordnung des Zahnrades auf dem Ansatz und eine leichte Montage dieser Teile gewährleistet.

Um einen Toleranzausgleich zu bewirken und selbst kleinste Drehwinkeländerungen zu erfassen, weist das Zwischenrad einen kleineren Umfang als das Zahnrad auf und ist auf einer verschiebbaren, federbelasteten Achse gelagert. Die federnd gelagerte Achse stellt hierbei den Toleranzausgleich sicher, da das Zahnrad und das Meßzahnrad jeweils einen festen Drehpunkt aufweisen, der zum einen durch die Lenksäule und zum anderen durch eine statorseitige Achse repräsentiert ist. Da der Abstand zwischen der Lenksäule und der Achse des Meßzahnrades toleranzbedingt schwankt und trotzdem ein störungsfreies Abkämmen der Zähne des Zahnrades sowie des Meßrades gewährleistet sein muß, ist die federbeaufschlagte, verschiebare Achse für das Zwischenrad vorgesehen. Das Zwischenrad ist somit flexibel gelagert und nimmt eine dem jeweiligen Abstand zwischen der Lenksäule und der Achse des Meßzahnrades entsprechende Position ein.

Um eine werkzeuglose Montage des Statorgehäusses zu erzielen, ist das Statorgehäuse mittels Klipselementen an Führungsstegen des Gehäuseoberteils befestigt. Die Führungsstege dienen neben der Befestigung des Statorgehäuses auch zur Positionierung desselben und sind einteilig mit dem Gehäuseoberteil ausgebildet.

Zur Erzielung einer kabellosen elektrischen Kopplung steht bevorzugt der Sensor des Stators mittels die Leiterplatte kontaktierender Anschlußkontakte mit dem Bordnetz in Verbindung.

Aufgrund entsprechender Meßtechnik sowie der Zuordnung von Referenzmarken detektiert vorzugsweise der Sensor eine Drehrichtungsumkehr des Rotors.

Nach einer weiteren vorteilhaften Ausgestaltung des Erfindungsgedankens überträgt der Sensor die ermittelten Meßdaten zur Auswertung über die Leiterplatte an einen Bordcomputer. Somit stehen die entsprechend aufbereiteten Meßdaten relevanten Geräten zum direkten Abruf über Datenleitungen zur Verfügung.

Vorzugsweise dient die Leiterplatte zur elektrischen Verbindung mehrerer Einzelschalter mit dem Bordnetz. Demnach bündelt die Leiterplatte die elektrischen Funktionen des Lenkwinkelsensors, der Verbindungseinrichtung sowie der zugeordneten Einzelschalter, die beispielsweise als Wischer-/Wascher-, Blinker-, Lichtschalter und/oder Zündschloß sowie weiterer elektronischer Sicherheitseinrichtungen zur Freischaltung einer Wegfahrsperre oder dergleichen ausgebildet sein können, und überträgt diese zu dem Bordnetz des Kraftfahrzeuges.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand zweier Ausführungsbeispiele unter Bezugnahme auf die zugehörigen Zeichnungen näher erläutert. Es zeigen:

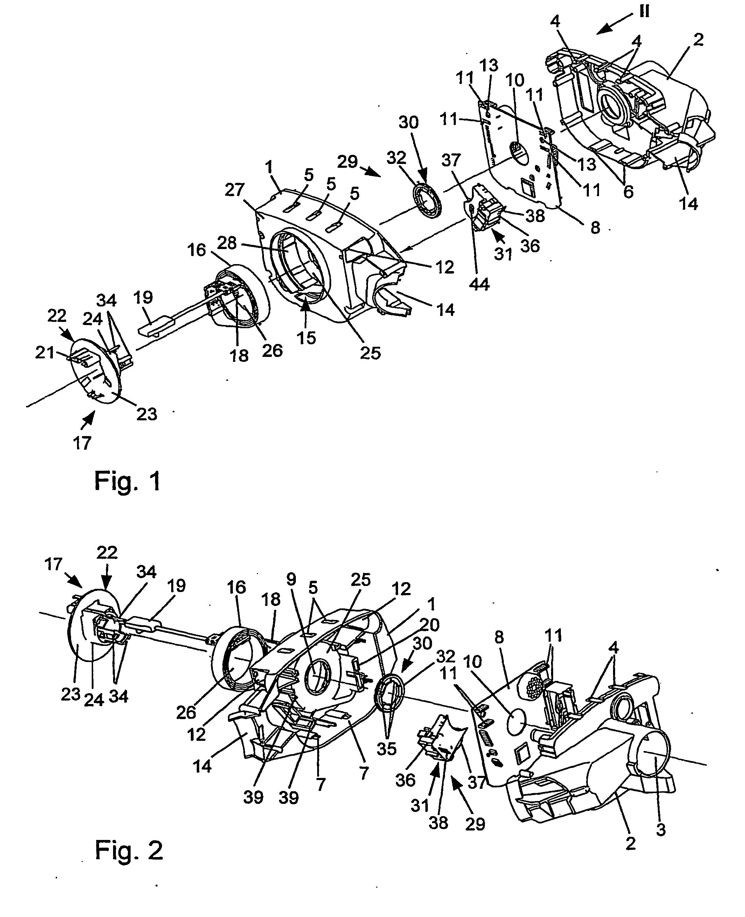

- Fig.1: eine Explosionsdarstellung eines erfindungsgemäßen Lenkstockschalters,
- Fig.2: eine Explosionsdarstellung in Richtung des Pfeils II nach Fig. 1,

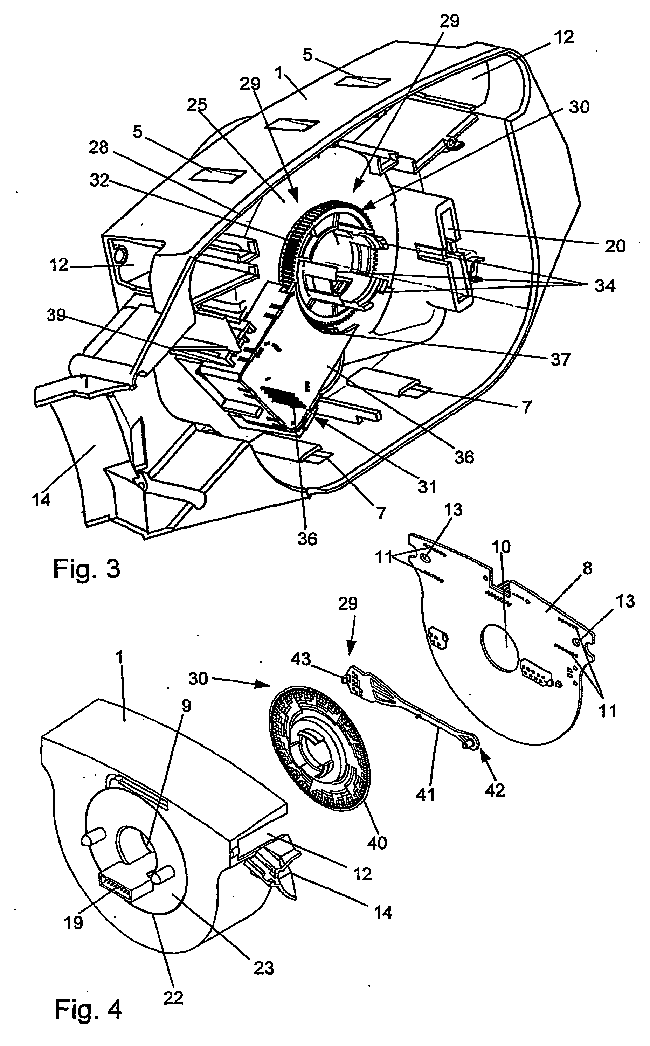

- Fig.3: eine perspektivische Darstellung in Richtung des Pfeils II nach Fig. 1 und
- Fig.4: eine Explosionsdarstellung des Lenkstockschalters nach der Erfindung in einer alternativen Ausführüngsform.

Ein Lenkstockschalter umfaßt ein aus einem Gehäuseoberteil 1 und einem Gehäuseunterteil 2 zusammengesetztes Gehäuse, wobei an dem Gehäuseunterteil 2 eine zylindrische Ausnehmung 3 zur Befestigung des Lenkstockschalters an einem nicht dargestellten Mantelrohr eines Kraftfahrzeuges ausgeformt ist. Im weiteren umfaßt das Gehäuseunterteil 2 randseitige Klipsarme 4, die beim Zusammenfügen des Gehäuseunterteils 2 und des Gehäuseoberteils 1 in korrespondierende Klipsöffnungen 5 des Gehäuseoberteils 1 eingreifen, sowie Zentrieröffnungen 6, in die entsprechende Zentrieransätze 7 des Gehäuseoberteils 1 eingesetzt werden. Schließlich ist dem Gehäuseunterteil 2 eine Leiterplatte 8 zugeordnet, die mit einem Bordnetz sowie einem Bordcomputer des Kraftfahrzeuges elektrisch gekoppelt ist.

Die Leiterplatte 8 weist eine mit der Ausnehmung 3 des Gehäuseunterteils 2 sowie mit einer Bohrung 9 des Gehäuseoberteils 1 fluchtende zylindrische Öffnung 10 zur Durchführung einer nicht dargestellten Lenksäule auf, deren freies Ende oberhalb des Gehäuseoberteils 1 mit einem Lenkrad verbunden ist. Weiterhin ist die Leiterplatte 8 mit Anschlüssen 11 für nicht dargestellte Einzelschalter versehen, deren Bedienelemente Durchbrüche 12 des Gehäuseoberteils 1 durchragen und die mittels leiterplattenseitigen Durchgangsbohrungen 13 durchdringenden Verschraubungen an dem Gehäuseunterteil 2 festgelegt sind. Im weiteren ist die Leiterplatte 8 mit einem Zündschloß verbunden, das in eine von dem Gehäuseoberteil 1 und dem Gehäuseunterteil 2 gebildete Öffnung 14 eingesetzt wird.

Das das Gehäuseunterteil 2 randseitig übergreifende Gehäuseoberteil 1 weist eine Aussparung 15 zur Aufnahme eines elektrischen Leiters 16 einer elektrischen Verbindungseinrichtung 17 auf, die das Lenkrad über die Leiterplatte 8 mit dem Bordnetz koppelt. Der flexibel ausgebildete Leiter 16 ist in mehreren Windungen spiralförmig aufgewickelt und jeweils endseitig mit einer Anschlußeinheit 18, 19 versehen, wobei die eine Anschlußeinheit 18 in eine Führungsausnehmung 20 des Gehäuseoberteils 1 eingesetzt und mit der Leiterplatte 8 gekoppelt ist. Die andere Anschlußeinheit 19, die mit dem Lenkrad in Verbindung steht, ist in eine Öffnung 21 eines Deckels 22 eingesetzt, der zur lenkradseitigen Befestigung einen Flansch 23 umfaßt, an dem ein Ansatz 24 koaxial angeformt ist. Der Flansch 23 des Deckels 22 überdeckt den Leiter 16, der sich auf einem von dem Gehäuseoberteil 1 ausgebildeten Boden 25 abstützt. Der Ansatz 24 ist drehbar in den Boden 25 eingesetzt, wobei der Ansatz 24 einen von dem Leiter 16 gebildeten Freiraum 26 durchragt. Die seitliche Begrenzung des Leiters 16 wird von einer sich von einer Oberseite 27 zu dem Boden 25 erstreckenden Wandung 28 des Gehäuseoberteils 1 gebildet.

Um eine relative Änderung des Drehwinkels des Lenkrades gegenüber dem Lenkstockschalter festzustellen, ist zwischen der Verbindungseinrichtung 17 und dem Gehäuseoberteil 1 des Lenkstockschalters ein Lenkwinkelsensor 29 angeordnet, der im wesentlichen aus einem Rotor 30 und einem Stator 31 besteht. Der Rotor 30 ist als Zahnrad 32 ausgebildet, dessen Nabe 33 drehfest auf dem freien Ende des Ansatzes 24 des Deckels 22 der Verbindungseinrichtung 17 befestigt ist. Hierzu weist der Ansatz 24 mehrere gleichmäßig über den Umfang verteilte Klipsarme 34 auf, die in korrespondierende Nuten 35 der Nabe 33 des Zahnrades 32 eingreifen und das Zahnrad 32 derart in dem aus dem Gehäuseoberteil 1 und dem Gehäuseunterteil 2 gebildeten Gehäuse haltern, daß dessen Stirnseiten im wesentlichen parallel sowie beabstandet zu dem Boden 25 des Gehäuseoberteils 1 ausgerichtet sind.

Der dem Rotor 30 zugeordnete Stator 31 umfaßt im wesentlichen ein Statorgehäuse 36 zur Lagerung eines in das Zahnrad 32 eingreifenden Zwischenrades 37 sowie zur Aufnahme eines nicht dargestellten Sensors, der die Umdrehungen des Zwischenrades 37 detektiert, wobei das Zwischenrad 37 einen kleineren Umfang als das Zahnrad 32 aufweist und auf einer verschiebbaren federbelasteten Achse 44 gelagert ist. Beim Verdrehen des Lenkrades streicht aufgrund der gewählten Übersetzung zwischen dem lenkradfesten Zahnrad 32 und dem Zwischenrad 37 eine relativ große Anzahl von Zähnen des Zwischenrades 37 an dem Sensor des Stators 31 vorbei. Hierbei wird durch Reflexionen an den Zähnen die Änderung der Stellung des Zwischenrades 37, die der Änderung des Drehwinkels des Lenkrades entspricht, erfaßt, oder es ist ein mit dem Zwischenrad 37 gekoppeltes, nicht dargestelltes Meßrad vorgesehen, wobei die verschiebbare Achse 44 des Zwischenrades 37 die Maßtoleranz zwischen der Lenksäule und der Achse des Meßrades ausgleicht und die auf die Achse 44 einwirkende Feder für eine gleichmäßige Andruckkraft des Zwischenrades 37 sowohl an dem Zahnrad 32 als auch an dem Meßrad bewirkt.

Im weiteren ragen aus dem Statorgehäuse 36 Anschlußkontakte 38 zur elektrischen Verbindung des Sensors mit der Leiterplatte 8. Darüberhinaus wird mittels der Anschlußkontakte 38 ein Datenaustausch zwischen dem Sensor und einem Bordcomputer über die Leiterplatte realisiert, wobei der Bordcomputer aus den Meßdaten des Sensors, die als elektrische Signale ausgegeben werden können, absolute Drehwinkel bzw. Drehwinkeländerungen berechnet und zur weiteren Verwendung gekoppelten Peripheriegeräten des Kraftfahrzeuges zur Verfügung stellt.

Zur Arretierung des Statorgehäuses 36 ist das Gehäuseoberteil 1 mit Führungsstegen 39 versehen, zwischen denen das Statorgehäuse 36 gehalten ist. Die Befestigung des Statorgehäuses 36 erfolgt mit nicht dargestellten Klipselementen.

In einer alternativen Ausgestaltung ist der Rotor 30 als eine kodierte Lochscheibe 40 zur Darstellung von Drehwinkeländerungen des Lenkrades bis zu einer vollen Umdrehung also 360° ausgebildet, der ein Rundenzähler 41 zur Erfassung der vollen Umdrehungen des Lenkrades zugeordnet ist. Die Lochscheibe 40 ist an den Klipsarmen 34 des Deckels 22 der Verbindungseinrichtung 17 drehfest angeordnet und bewegt sich somit synchron zu der Verdrehung des Lenkrades. Der Rundenzähler 41 ragt mit einem Ende 42 über den Umfang der Lochscheibe 40 hinaus und wird zur Übertragung der Drehbewegungen des Lenkrades entweder ebenfalls fest mit dem Deckel 22 verbunden oder auf einer Achse des Deckels 22 gelagert, wobei eine Nase 43 des Rundenzählers 41 in eine spriralförmigen Nut der Lochscheibe 40 oder einer separaten, drehfest mit dem Deckel 22 verbundenen Scheibe eingreift.

Zur Abtastung des Musters bzw. der Codierung der Lochscheibe 40 umfaßt ein nicht dargestellter, an dem Gehäuseoberteil 1 befestigter Stator eine Gabellichtschranke, die annähernd den gesamten Radius der Lochscheibe überstreicht. Das Muster der Lochscheibe 40 repräsentiert entsprechende Winkelstellungen des Lenkrades, die die Gabellichtschranke beim Verdrehen des Lenkrades detektiert und entsprechende Impulse, wie zuvor geschildert, über mit der Leiterplatte 8 gekoppelte Anschlußkontakte an einen Bordcomputer zur Auswertung überträgt. Dem Stator ist weiterhin eine Gabellichtschranke zur Erkennung eines Durchganges des Rundenzählers 41 zugeordnet, die ihre Signale ebenfalls über Anschlußkontakte an die Leiterplatte 8 und den mit der Leiterplatte 8 gekoppelten Bordcomputer übermittelt.

### Bezugszeichenliste

- 1.: Gehäuseoberteil
- 2.: Gehäuseunterteil
- 3.: Ausnehmung
- 4.: Klipsarm
- 5.: Klipsöffnung
- 6.: Zentrieröffnung
- 7.: Zentrieransatz
- 8.: Leiterplatte
- 9.: Bohrung
- 10.: Öffnung
- 11.: Anschluß
- 12.: Durchbruch
- 13.: Durchgangsbohrung
- 14.: Öffnung
- 15.: Aussparung
- 16.: Leiter
- 17.: Verbindungseinrichtung
- 18.: Anschlußeinheit
- 19.: Anschlußeinheit
- 20.: Führungsausnehmung
- 21.: Öffnung
- 22.: Deckel
- 23.: Flansch
- 24.: Ansatz
- 25.: Boden
- 26.: Freiraum
- 27.: Oberseite
- 28.: Wandung
- 29.: Lenkwinkelsensor
- 30.: Rotor
- 31.: Stator
- 32.: Zahnrad
- 33.: Nabe
- 34.: Klipsarm
- 35.: Nut
- 36.: Statorgehäuse
- 37.: Zwischenrad
- 38.: Anschlußkontakt
- 39.: Führungssteg
- 40.: Lochscheibe
- 41.: Rundenzähler
- 42.: Ende
- 43.: Nase
- 44.: Achse

## Patentansprüche

1. Lenkstockschalter mit einer in einem mantelrohrfesten, aus einem Gehäuseoberteil (1) und einem Gehäuseunterteil (2) zusammengesetzten Gehäuse angeordneten elektrischen Verbindungseinrichtung (17) zwischen Lenkrad und Bordnetz, die einen spiralförmig aufgewickelten, flexiblen elektrischen Leiter (16) umfaßt, der in das Gehäuseoberteil (1) eingesetzt und von einem lenkradfesten Deckel (22) abgedeckt ist, wobei der Leiter (16) über eine Anschlußeinheit (19) mit dem Lenkrad verbunden und der Verbindungseinrichtung (17) innerhalb des Gehäuses ein an dem Deckel (22) befestigter Rotor (30) eines Lenkwinkelsensors (29) zugeordnet ist, dessen an dem Gehäuseoberteil (1) befestigter Stator (31) eine Leiterplatte (8) kontaktiert, **dadurch gekennzeichnet, daß** der Leiter (16) mit einer mit dem Bordnetz verbundenen zentralen Leiterplatte (8), die der Stator (31) direkt kontaktiert, gekoppelt ist, wobei der Rotor (30) als Zahnrad (32) ausgebildet ist und der Stator (31) ein in das Zahnrad (32) eingreifendes, innerhalb eines Statorgehäuses (36) drehbar gelagertes Zwischenrad (37) umfaßt und ein als Meßzahnrad ausgebildeter Sensor die Umdrehungen des Zwischenrades (37) detektiert.

2. Lenkstockschalter nach Anspruch 1, **dadurch gekennzeichnet, daß** der Deckel (22) zur lenkradseitigen Befestigung einen Flansch (23) umfaßt, an dem ein koaxialer Ansatz (24) zur Halterung der Anschlußeinheit (18) der Verbindungseinrichtung (17) sowie zur Festlegung des Rotors (30) angeformt ist.

3. Lenkstockschalter nach Anspruch 1, **dadurch gekennzeichnet, daß** die Nabe (33) des Zahnrades den Ansatz (24) des Deckels (22) übergreift.

4. Lenkstockschalter nach den Ansprüchen 2 und 3, **dadurch gekennzeichnet, daß** der Ansatz (24) des Deckels (22) umfangsseitig mit mehreren gleichmäßig verteilten Klipsarmen (34) versehen ist, die in korrespondierende Nuten (35) der Nabe (33) des Zahnrades (32) eingreifen.

5. Lenkstockschalter nach einem der Ansprüche 1 bis 4, **dadurch gekennzeichnet, daß** das Zwischenrad (37) einen kleineren Umfang als das Zahnrad (32) aufweist und auf einer verschiebbaren, federbelasteten Achse (44) gelagert ist.

6. Lenkstockschalter nach Anspruch 5, **dadurch gekennzeichnet, daß** das Statorgehäuse (36) mittels Klipselementen an Führungsstegen (39) des Gehäuseoberteils (1) befestigt ist.

7. Lenkstockschalter nach einem der Ansprüche 1 bis 6, **dadurch gekennzeichnet, daß** der Sensor des Stators (31) mittels die Leiterplatte (8) kontaktierender Anschlußkontakte (38) mit dem Bordnetz in Verbindung steht.

8. Lenkstockschalter nach einem der Ansprüche 1 bis 7, **dadurch gekennzeichnet, daß** der Sensor eine Drehrichtungsumkehr des Rotors (30) detektiert.

9. Lenkstockschalter nach einem der Ansprüche 1 bis 8, **dadurch gekennzeichnet, daß** der Sensor die ermittelten Meßdaten zur Auswertung über die Leiterplatte (8) an einen Bordcomputer überträgt.

10. Lenkstockschalter nach einem der Ansprüche 1 bis 9, **dadurch gekennzeichnet, daß** die Leiterplatte (8) zur elektrischen Verbindung mehrerer Einzelschalter mit dem Bordnetz dient.

## Claims

1. Steering column switch having an electric connecting device (17) between the steering wheel and onboard power supply arranged in a housing composed of a housing upper part (1) and a housing lower part (2) integral with the outer steering column which device comprises a helically wound, flexible electric conductor (16) that is inserted into the housing upper part (1) and covered by a cover (22) integral with the steering wheel, wherein the conductor (16) is connected via a terminal unit (19) to the steering wheel and associated with the connecting device (17) inside the housing and fastened to the cover (22) is a rotor (30) of a steering angle sensor (29) whose stator (31) fastened to the housing upper part (1) makes contact with a printed circuit board (8), **characterised in that** the conductor (16) is coupled to a central printed circuit board (8) which is connected to the onboard power supply and with which the stator (31) makes direct contact, wherein the rotor (30) is constructed as a gear wheel (32) and the stator (31) comprises an intermediate wheel (37) which is rotatably mounted inside a stator housing (36) and engages in the gear wheel (32) and a sensor constructed as a measuring gear wheel detects the revolutions of the intermediate wheel (37).

2. Steering column switch according to claim 1, **characterised in that** for fastening at the steering wheel end the cover (22) comprises a flange (23) on which a coaxial projection (24) for mounting the terminal unit (18) of the connecting device (17) and for fixing the rotor (30) in place is formed.

3. Steering column switch according to claim 1, **characterised in that** the hub (33) of the gear wheel engages over the projection (24) of the cover (22).

4. Steering column switch according to claims 2 and 3, **characterised in that** the projection (24) of the cover (22) is provided at the perimeter with a plurality of uniformly distributed clip arms (34) which engage in corresponding grooves (35) on the hub (33) of the gear wheel (32).

5. Steering column switch according to one of claims 1 to 4, **characterised in that** the intermediate wheel (37) has a smaller circumference than the gear wheel (32) and is mounted on a displaceable, spring-loaded axle (44).

6. Steering column switch according to claim 5, **characterised in that** the stator housing (36) is fastened by means of clip elements to guide webs (39) on the housing upper part (1).

7. Steering column switch according to one of claims 1 to 6, **characterised in that** the sensor of the stator (31) is connected to the onboard power supply by means of connecting contacts (38) making contact with the printed circuit board (8).

8. Steering column switch according to one of claims 1 to 7, **characterised in that** the sensor detects a reversal of the direction of rotation of the rotor (30).

9. Steering column switch according to one of claims 1 to 8, **characterised in that** the sensor transmits the measured data obtained to an onboard computer via the printed circuit board (8) for evaluation.

10. Steering column switch according to one of claims 1 to 9, **characterised in that** the printed circuit board (8) serves for the electric connection of a plurality of individual switches to the onboard power supply.

## Revendications

1. Commutateur de colonne de direction avec un dispositif de liaison électrique (17) entre volant de direction et réseau de bord qui est disposé dans un boîtier solidaire du tube - corps, composé d'une partie supérieure de boîtier (1) et d'une partie inférieure de boîtier (2), et qui comprend un conducteur électrique flexible enroulé en spirale (16) qui est inséré dans la partie supérieure de boîtier (1) et est recouvert par un couvercle (22) solidaire du volant, le conducteur (16) étant relié au volant de direction par l'intermédiaire d'un module de connexion (19), et au dispositif de liaison (17) étant associé, à l'intérieur du boîtier, un rotor (30), fixé au couvercle (22), d'un capteur d'angle de braquage (29) dont le stator (31) fixé à la partie supérieure de boîtier (1) est en contact avec une plaque de circuit imprimé (8), **caractérisé en ce que** le conducteur (16) est couplé à une plaque centrale de circuit imprimé (8) qui est reliée au réseau de bord et qui est mise en contact directement par le stator (31), le rotor (30) étant conformé en roue dentée (32) et le stator (31) comprenant une roue intermédiaire (37) engrenée dans la roue dentée (32), montée à rotation à l'intérieur d'un boîtier de stator (36) et un capteur conformé en roue de mesure dentée détectant des rotations de la roue intermédiaire (37).

2. Commutateur de colonne de direction selon la revendication 1, **caractérisé en ce que** le couvercle (22) comprend, pour la fixation côté volant, une semelle (23) sur laquelle est surmoulé un appendice coaxial (24) pour maintenir le module de connexion (18) du dispositif de liaison (17) ainsi que pour fixer le rotor (30).

3. Commutateur de colonne de direction selon la revendication 1, **caractérisé en ce que** le moyeu (33) de la roue dentée entoure l'appendice (24) du couvercle (22).

4. Commutateur de colonne de direction selon les revendications 2 et 3, **caractérisé en ce que** l'appendice (24) du couvercle (22) est pourvu, sur son pourtour, de plusieurs bras de clipsage répartis uniformément (34) qui s'engagent dans des rainures correspondantes (35) du moyeu (33) de la roue dentée (32).

5. Commutateur de colonne de direction selon l'une des revendications 1 à 4, **caractérisé en ce que** la roue intermédiaire (37) présente une circonférence plus petite que la roue dentée (32) et est montée sur un axe mobile, sollicité élastiquement (44).

6. Commutateur de colonne de direction selon la revendication 5, **caractérisé en ce que** le boîtier de stator (36) est fixé, au moyen d'éléments de clipsage, à des nervures de guidage (39) de la partie supérieure de boîtier (1).

7. Commutateur de colonne de direction selon l'une des revendications 1 à 6, **caractérisé en ce que** le capteur du stator (31) est connecté au réseau de bord au moyen de contacts de connexion (38) qui sont en contact avec la plaque de circuit imprimé (8).

8. Commutateur de colonne de direction selon l'une des revendications 1 à 7, **caractérisé en ce que** le capteur détecte une inversion du sens de rotation du rotor (30).

9. Commutateur de colonne de direction selon l'une des revendications 1 à 8, **caractérisé en ce que**, par l'intermédiaire de la plaque de circuit imprimé (8), le capteur transmet les données de mesure recueillies à un ordinateur de bord aux fins d'exploitation.

10. Commutateur de colonne de direction selon l'une des revendications 1 à 9, **caractérisé en ce que** la plaque de circuit imprimé (8) sert à la liaison électrique de plusieurs commutateurs individuels avec le réseau de bord.
